# EUROPEAN PATENT APPLICATION

(11) **EP 4 647 945 A1**
(43) Date of publication of application: **12.11.2025**
(21) Application number: 23917070.7
(22) Date of filing: 25.09.2023
(51) Int. Cl.: G06F 21/31, G06F 9/445

(54) **APPLICATION PROGRAM PERMISSION MANAGEMENT METHOD**

(30) Priority: 16.01.2023 CN 202310084422
(71) Applicant: Huawei Technologies Co., Ltd., Shenzhen, Guangdong 518129 (CN)
(72) Inventor: HU, Zhaodong, Shenzhen, Guangdong 518129 (CN); CHENG, Jian, Shenzhen, Guangdong 518129 (CN); WANG, Shuo, Shenzhen, Guangdong 518129 (CN); WANG, Jingjin, Shenzhen, Guangdong 518129 (CN); WANG, Hui, Shenzhen, Guangdong 518129 (CN); ZHANG, Wei, Shenzhen, Guangdong 518129 (CN); WANG, Xiayang, Shenzhen, Guangdong 518129 (CN); DAI, Li, Shenzhen, Guangdong 518129 (CN)
(74) Representative: Gill Jennings & Every LLP
(86) International application number: PCT/CN2023/121245
(87) International publication number: WO 2024/152602

(57) **Abstract**

Embodiments of this application provide an application permission management method that relates to the field of operating system technologies. In the method, a permission that an application has can be changed based on a running status of the application, thereby refining a granularity of managing, by an electronic device, the permission that the application has. In the method, the electronic device switches, in response to a switching instruction input by a user for the application, the application from a first state to a second state. The electronic device determines, based on the second state of the application and a management rule, a target permission bit of each kernel function for the application and a status of the target permission bit, and changes the status of the target permission bit. The status of the target permission bit varies when the application is in the first state and the second state. This application is applied to a process in which the electronic device performs permission management on the application.

## Description

This application claims priority to Chinese Patent Application No. 202310084422.0, filed with the China National Intellectual Property Administration on January 16, 2023 and entitled "APPLICATION PERMISSION MANAGEMENT METHOD", which is incorporated herein by reference in its entirety.

### TECHNICAL FIELD

This application relates to the field of operating system technologies, and in particular, to an application permission management method.

### BACKGROUND

When an application is installed in an electronic device, the application may apply for a corresponding permission from the electronic device, to implement a corresponding function. The electronic device may perform permission management on the application based on the permission applied for by the application, to enable or disable the corresponding permission for the application.

However, permission management performed by the electronic device on the application is fixed. For example, the electronic device enables, for an application A, a permission that can access a kernel function 1 of the electronic device. After the permission is enabled, the application A always has the permission a. When the application A runs, regardless of whether the application A needs to implement a function corresponding to the kernel function 1, the application A has the permission to access the kernel function 1.

### SUMMARY

Embodiments of this application provide an application permission management method. In the method, a permission that the application has can be changed based on a running status of an application.

To achieve the foregoing objective, the following technical solutions are used in embodiments of this application.

According to a first aspect, an embodiment of this application provides an application permission management method. The method may be applied to an electronic device. In the method, the electronic device switches, in response to a switching instruction input by a user for an application, the application from a first state to a second state. The first state is different from the second state. For example, when the first state is a foreground state, the second state may be a background state or the like. The electronic device determines, based on the second state and a management rule, a target permission bit of each kernel function for the application. Then, the electronic device changes a status of the target permission bit. The status of the target permission bit varies when the application is in the first state and the second state.

In the method of this application, the electronic device may change, based on a change of a status of the application, a status of a permission bit corresponding to each kernel function of the application, to refine a granularity of managing, by the electronic device, a permission that the application has.

With reference to the first aspect, in a possible design, the management rule includes a mapping relationship between a running status of the application, and a permission bit of the kernel function and a status of the permission bit.

In the method, the kernel function may be preset in a kernel module, and the kernel function may be a function frequently used by each application. The kernel function is used to enable the application that accesses the kernel function to implement a corresponding function (for example, a function of obtaining an unread message, a function of obtaining a contact list, and a function of modifying contact information) based on a corresponding permission bit. The permission bit corresponding to the kernel function may be, for example, a permission bit representing a permission like a "read" permission, a "write" permission, an "execute" permission, or the like.

With reference to the first aspect, in a possible design, the management rule is generated based on an expected behavior of the application in each running status, the kernel function that needs to be accessed when the application implements the expected behavior, and the status of the permission bit of each kernel function for the application.

The expected behavior of the application is a behavior that may occur in the application, or a behavior that may be executed by the application. The expected behavior may vary when the application is in different running statuses. The application needs to access different kernel functions when the application has different expected behaviors. Therefore, the management rule may be generated based on the expected behavior of the application in each running status, the kernel function that needs to be accessed when the application implements the expected behavior, and the status of the permission bit of each kernel function for the application. The granularity of managing, by the electronic device, the permission that the application has can be refined based on the status of the application and the management rule.

With reference to the first aspect, in a possible design, the kernel function includes at least one subcommand. The permission bit of the kernel function and the status of the permission bit include a permission bit of the subcommand in the kernel function and a status of the permission bit of the subcommand.

The subcommand may be used by the application that accesses the subcommand, to implement a function corresponding to the subcommand. In the method, the kernel function and the status of the permission bit of the subcommand in the kernel function are managed. Even if the application can access a kernel function, it does not indicate that the application can access all subcommands in the kernel function. Therefore, the management granularity is more refined.

With reference to the first aspect, in a possible design, the target permission bit includes a first permission bit. The first permission bit is a permission bit that is in an enabled state when the application is in the first state and that is in a disabled state when the application is in the second state.

With reference to the first aspect, in a possible design, the electronic device changes a status of the first permission bit from the enabled state to the disabled state.

In this solution, the electronic device may change, based on the change of the status of the application, the status of the permission bit corresponding to each kernel function of the application, to refine the granularity of managing, by the electronic device, the permission that the application has.

With reference to the first aspect, in a possible design, before changing the status of the first permission bit, the electronic device deletes, based on a kernel function corresponding to the first permission bit, behavior data generated by the application when the first permission bit is in the enabled state.

In this solution, when the first permission bit is in the enabled state for the application, the application may generate the behavior data based on the enabled state of the first permission bit. Therefore, when changing the first permission bit from the enabled state to the disabled state, the electronic device needs to delete the behavior data.

With reference to the first aspect, in a possible design, the target permission bit further includes a second permission bit. The second permission bit is a permission bit that is in the disabled state when the application is in the first state and that is in the enabled state when the application is in the second state.

With reference to the first aspect, in a possible design, the electronic device changes a status of the second permission bit from the disabled state to the enabled state.

In this solution, the electronic device may change, based on the change of the status of the application, the status of the permission bit corresponding to each kernel function of the application, to refine the granularity of managing, by the electronic device, the permission that the application has.

According to a second aspect, embodiments of this application provide an electronic device. The electronic device includes a memory and one or more processors. The memory is coupled to the processor. The memory is configured to store computer program code. The computer program code includes computer instructions. When the processor executes the computer instructions, the electronic device is enabled to perform the method according to the first aspect and any possible design of the first aspect.

According to a third aspect, embodiments of this application provide a computer storage medium, including computer instructions. When the computer instructions are run on an electronic device, the electronic device is enabled to perform the method according to the first aspect and any possible design of the first aspect.

According to a fourth aspect, embodiments of this application provide a computer program product. When the computer program product runs on a computer, the computer is enabled to perform the method according to the first aspect and any possible design of the first aspect.

### BRIEF DESCRIPTION OF DRAWINGS

FIG. 1 is a block diagram of a software structure of an electronic device according to an embodiment of this application;
FIG. 2 is a flowchart of an application permission management method according to an embodiment of this application;
FIG. 3 is a diagram of switching an application interface according to an embodiment of this application;
FIG. 4 is a bitmap representing permission bits according to an embodiment of this application;
FIG. 5 is a diagram of a kernel function according to an embodiment of this application;
FIG. 6 is a diagram in which a system service module changes a status of a permission bit of a kernel function according to an embodiment of this application;
FIG. 7 is a flowchart of an authentication mechanism according to an embodiment of this application; and
FIG. 8 is a diagram of managing, by a system service module, a status of a permission bit of a subcommand in a kernel function according to an embodiment of this application.

### DESCRIPTION OF EMBODIMENTS

The following describes technical solutions in embodiments of this application with reference to accompanying drawings in embodiments of this application. In descriptions in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

For ease of understanding, some concepts related to embodiments of this application are described for reference by using examples. Details are as follows:
Subject: is an entity that makes a resource access request to a kernel of an electronic device.
Object: may be all information, resources, entities, and the like that can be operated.

Control policy: is a set of permission rules for a subject to access an object. The control policy reflects an authorization behavior, and specifies whether a subject has permissions like "read", "write", "execute", and the like on an object.

Operating system: is a set of software that is used to manage hardware resources of an electronic device, control running of an application in the electronic device, and provide an interactive operation interface for a user.

Discretionary access control (discretionary access control, DAC): is an "autonomous" permission management mechanism based on a subject, an object, and a control policy. By authorizing an identity of an operating system entity and access of the operating system entity to an operating system resource, a subject has a permission to access a file, a data table, and other access entities created by the subject. The subject can also assign its access permission to another subject or revoke the access permission. The subject allows an owner of the access entity to formulate a control policy for access to the entity. Usually, the subject may limit, through an access control list, an operation that can be performed on the object.

Mandatory access control (mandatory access control, MAC): is a control policy that an operating system forces a subject to obey. An entity created by the operating system for a subject controls, according to a specified rule, a permission of the subject and access of the subject to an operation entity. A main feature is to implement mandatory access control on all subjects and objects, which are controlled by the subjects, such as processes, threads, files, and devices. In the MAC, each subject and each file are assigned a specific security level. Only a system administrator can determine an access permission of the subject and a group. The subject cannot change the security level of itself or any object. The operating system compares the security level of the subject and that of a file to be accessed, to determine whether the subject can access the file.

In a related technology, an electronic device may perform, based on DAC, permission management on an application.

For example, when the application in the electronic device accesses a kernel function in the electronic device, the electronic device may determine, according to a control policy, whether the application has a permission to access the kernel function. Each kernel function may further include at least one subcommand. If the application has a permission to access a kernel function, the application also has the permission to access each subcommand in the kernel function.

However, because the control policy is preset in an operating system, unless a system administrator changes the control policy, permission management performed, according to the control policy, by the electronic device on the application is fixed. This permission management method is not flexible enough. In addition, after the electronic device determines, according to the control policy, whether the application has an access permission for each kernel function, the application also has a permission to access all subcommands included in the kernel function. A granularity of this management method is coarse, and cannot be accurate to whether the application has a permission to manage each subcommand.

In another related technology, an electronic device may perform, based on MAC, permission management on an application. In this management manner, an operating system adds a tag to each object and adds a token to each subject according to preset rules. In addition, the operating system establishes a mapping relationship between each tag and each token. When the subject accesses the object, a kernel may detect whether the mapping relationship between the token of the subject and the tag of the object exists. If the mapping relationship between the token of the subject and the tag of the object exists, the subject has a permission to access the object. If the mapping relationship between the token of the subject and the tag of the object does not exist, the subject does not have the permission to access the object.

For example, when the application in the electronic device accesses a kernel function in the electronic device, the electronic device may detect whether a mapping relationship between a token of the application and a tag of each kernel function exists, to determine whether the application has a permission to access each kernel function.

However, this management method also cannot accurately manage whether the application has a permission to a subcommand included in each kernel function, and a management granularity is coarse. In addition, in this manner of adding the token to each subject and adding the tag to each object, a large amount of memory of the electronic device is occupied.

In another related technology, an electronic device may perform, based on inter-process communication (inter-process communication, IPC), permission management on an application.

For example, when the application in the electronic device accesses a kernel function in the electronic device, the electronic device may expose, through the IPC, interfaces that are used to access each kernel function to the application for access. In addition, a corresponding access policy may be set for the electronic device. When another application accesses these interfaces, the communication authentication mechanism IPC is triggered to check whether the another application has a permission to access the interfaces. If the another application does not have the permission, the access is rejected.

However, this management method depends on the IPC. When the electronic device performs, based on the IPC, permission management on the application, a quantity of instructions sent to a processor of the electronic device increases, thereby increasing power consumption of the electronic device.

To resolve the foregoing problem, embodiments of this application provide an application permission management method. The method may be applied to an electronic device. In the method, the electronic device switches, in response to a switching instruction input by a user for an application, the application from a first state to a second state. Then, the electronic device may change, based on a change of a status of the application, a status of a permission bit corresponding to each kernel function of the application, to refine a granularity of managing, by the electronic device, a permission that the application has.

The electronic device in embodiments of this application may be a portable computer (such as a mobile phone), a tablet computer, a notebook computer, a personal computer (personal computer, PC), a wearable electronic device (such as a smart watch), an augmented reality (augmented reality, AR)/virtual reality (virtual reality, VR) device, or a vehicle-mounted computer. Specific forms of the electronic device are not specially limited in the following embodiments.

An operating system of the electronic device may use a layered architecture, an event-driven architecture, a microkernel architecture, a microservice architecture, or a cloud architecture. In embodiments of this application, an Android system of the layered architecture is used as an example to illustrate a software structure of the electronic device.

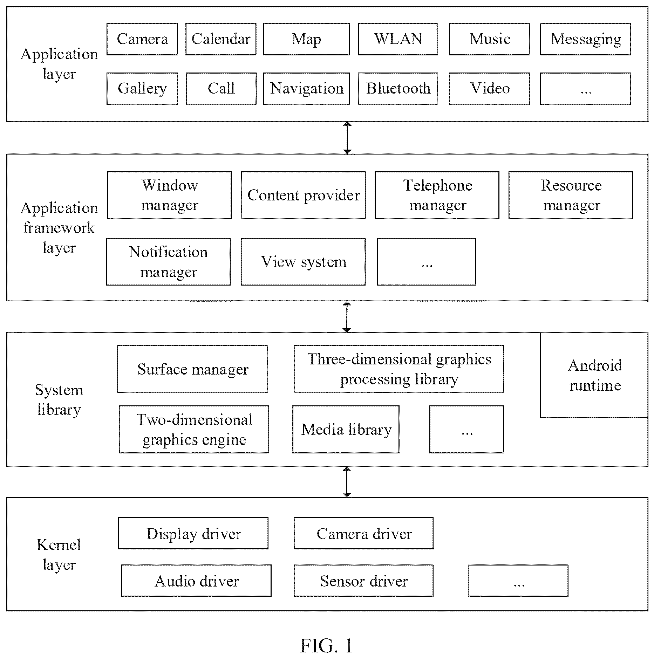

FIG. 1 is a block diagram of a software structure of an electronic device according to an embodiment of this application.

In a layered architecture, software is divided into several layers, and each layer has a clear role and task. The layers communicate with each other through a software interface. In some embodiments, an Android system is divided into four layers from top to bottom: an application layer, an application framework layer, a system library, and a kernel layer.

The application layer may include a series of application packages.

As shown in FIG. 1, the application packages may include applications such as Camera, Gallery, Calendar, Call, Map, Navigation, WLAN, Bluetooth, Music, Video, and Messaging.

The application framework layer provides an application programming interface (application programming interface, API) and a programming framework for an application at the application layer. The application framework layer includes some predefined functions.

The application framework layer may include a window manager, a content provider, a view system, a telephone manager, a resource manager, a notification manager, and the like.

The system library includes a kernel library and a virtual machine. The system library is responsible for scheduling and managing the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The kernel layer is a layer between hardware and software. The kernel layer includes at least a display driver, a camera driver, an audio driver, and a sensor driver.

In embodiments of this application, the system library may also be referred to as a system service module. The kernel layer may also be referred to as a kernel module. The kernel module stores a management rule. The management rule includes a mapping relationship between a running status of an application, and a permission bit of each kernel function and a status of the permission bit. The kernel function may be preset in the kernel module by a system administrator, and the kernel function may be a function frequently used by each application. The kernel function is used to enable the application that accesses the kernel function to implement a corresponding function (for example, a function of obtaining an unread message, a function of obtaining a contact list, and a function of modifying contact information) based on a corresponding permission bit. The permission bit corresponding to the kernel function may be, for example, a permission bit representing a permission like a "read" permission, a "write" permission, an "execute" permission, or the like.

The system service module may manage, based on the running status of the application and the management rule, the permission bit corresponding to each kernel function of the application. In this way, when the running status of the application changes, the system service module may change a status of the permission bit corresponding to each kernel function of the application. If the status of the permission bit is an enabled state, the application has a permission corresponding to the permission bit when accessing the corresponding kernel function. If the status of the permission bit is a disabled state, the application does not have the permission corresponding to the permission bit when accessing the corresponding kernel function.

With reference to the accompanying drawings in this specification, the following describes an application permission management method provided in embodiments of this application.

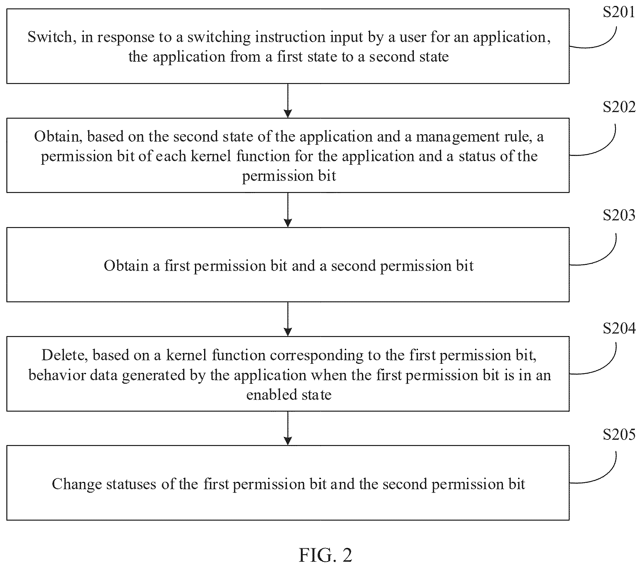

FIG. 2 is a flowchart of the application permission management method according to an embodiment of this application. The method may include the following steps.

S201: Switch, in response to a switching instruction input by a user for an application, the application from a first state to a second state.

The switching instruction is an instruction that instructs switching of a running status of the application. The user may input the switching instruction to an electronic device. After detecting the switching instruction input by the user, the electronic device may switch the running status of the application. The running status of the application before switching is the first state, and the running status of the application after switching is the second state. The first state is different from the second state.

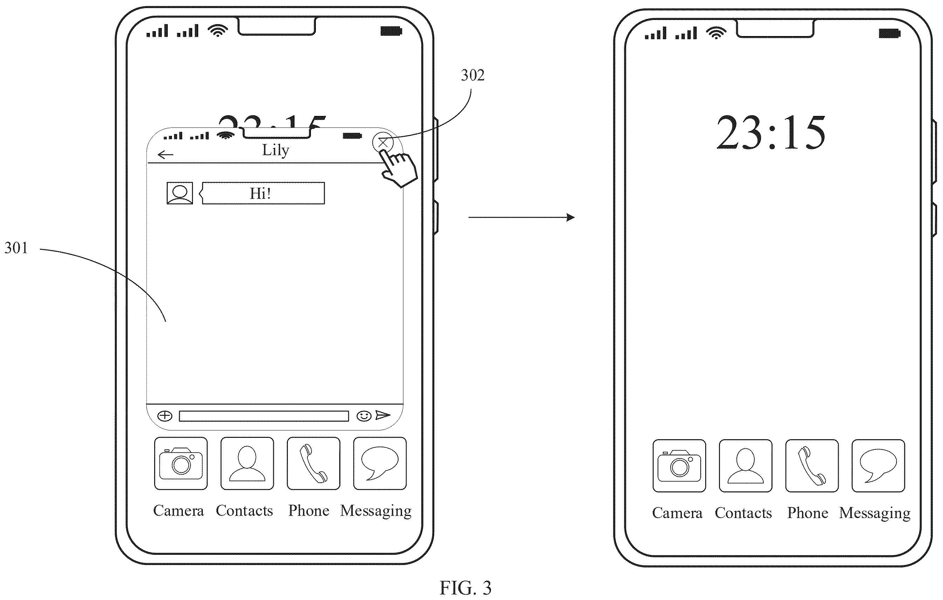

For example, the running status of the application may include a foreground state and a background state. Refer to FIG. 3. When the running status of the application is the foreground state, a display of the electronic device may display an application interface 301 of the application. The application interface includes a close control 302 that is configured to close the application interface. The user may tap the close control 302 to input, to the electronic device, the switching instruction that instructs switching of the running status of the application. After the electronic device detects the tap operation performed by the user on the close control 302, in other words, after receiving the switching instruction input by the user, the electronic device may close the application interface, and switch the running status of the application from the foreground state to the background state.

S202: Obtain, based on the second state of the application and a management rule, a permission bit of each kernel function for the application and a status of the permission bit.

A same application may correspond to a plurality of kernel functions. Each kernel function may correspond to at least one permission bit. The management rule includes a mapping relationship between the running status of the application, and the permission bit of each kernel function and the status of the permission bit.

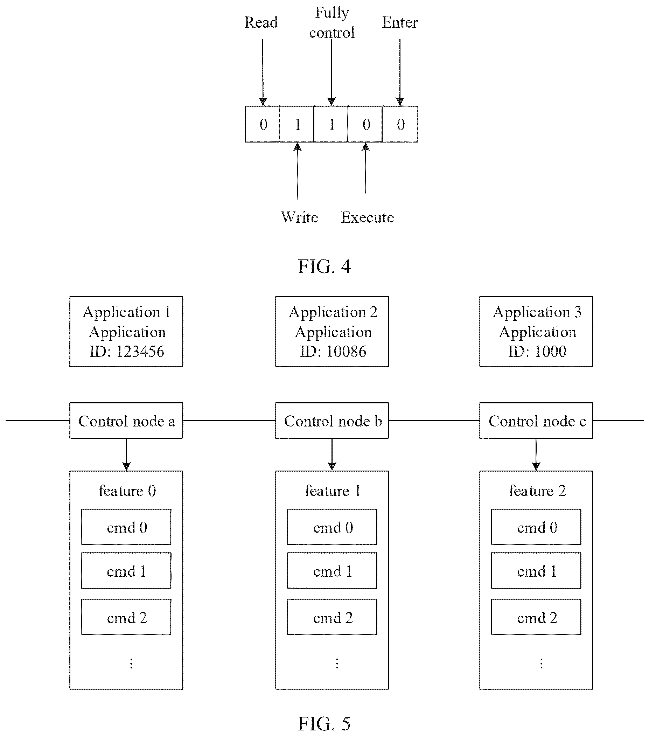

In some embodiments, each permission bit corresponds to one permission. For example, the permission bits may be represented in a bitmap form, as shown in FIG. 4. The permission bits may also be represented as (0, 1, 1, 0, 0). This is not limited in this application.

When the permission bits are represented in the bitmap form shown in FIG. 4, 0, 1, 1, 0, 0 may all represent permissions corresponding to the permission bits, that is, statuses of the permission bits. For example, in 0, 1, 1, 0, 0, a first bit may correspond to a "read" permission, a second bit may correspond to a "write" permission, a third bit may correspond to a "fully control" permission, a fourth bit may correspond to an "execute" permission, and a fifth bit may correspond to an "enter" permission. When a digit on the permission bit is "0", it may indicate that the status of the permission bit is a disabled state, in other words, it indicates that the electronic device does not enable the permission, corresponding to the permission bit, for the application. When the digit on the permission bit is "1", it may indicate that the status of the permission bit is an enabled state, in other words, it indicates that the electronic device enables the permission, corresponding to the permission bit, for the application.

In some embodiments, an expected behavior of the application may be obtained based on the running status of the application. The expected behavior of the application is a behavior that may occur in the application, or a behavior that may be executed by the application.

For example, when the application is in the foreground state, the application may generate a behavior of receiving a message sent by another electronic device. Alternatively, the application may generate a behavior of obtaining user information stored in the electronic device. Alternatively, the application may generate a behavior of receiving content input by the user on the application interface corresponding to the application and sending the content to another electronic device, or the like.

When the application is in the background state, the application may also generate a behavior of receiving a message sent by another electronic device. Alternatively, the application may also generate a behavior of obtaining user information stored in the electronic device. However, when the application runs in the background, the electronic device does not display an application interface corresponding to the application. Therefore, the electronic device does not generate the behavior of receiving content input by the user on the application interface corresponding to the application and sending the content to another electronic device, or the like.

The expected behavior may vary when the application is in different running statuses. For example, when the application is in the foreground state, the application may generate the behavior of receiving content input by the user on the application interface corresponding to the application and sending the content to another electronic device. However, when the application is in the background state, the application does not generate the behavior of receiving content input by the user on the application interface corresponding to the application and sending the content to another electronic device. Therefore, when the application is in the background state, the electronic device does not need to enable, for the application, a permission of receiving content input by the user on the application interface corresponding to the application and sending the content to another electronic device. That is, when a kernel function that is used to implement a function of receiving, by the application, content input by a user on the application interface corresponding to the application and sending the content to another electronic device is a target kernel function, permission bits corresponding to the target kernel function are: "read", "write", and "execute", and the application may be set to be in the background state, the "read", "write", and "execute" permission bits corresponding to the target kernel function are all in the disabled state, and are not enabled for the application in the background state. Correspondingly, when the application is in the foreground state, the "read", "write", and "execute" permission bits corresponding to the target kernel function may be set to be in the enabled state, and are enabled for the application in the foreground state.

With reference to the foregoing embodiment, the management rule may be generated based on the expected behavior of the application in each running status, the kernel function that needs to be accessed when the application implements the expected behavior, and the enabled/disabled state of the permission bit of each kernel function for the application. The management rule includes a mapping relationship between the running status of the application, and the permission bit of each kernel function and the status of the permission bit.

**Table 1**

| Application | Running status | Kernel function | Permission bit | Status of the permission bit |
|---|---|---|---|---|
| aaa | Foreground state | Feature 0 | authflag 0 | (1, 1, 1, 1) |
| aaa | Background state | Feature 0 | authflag 0 | (1, 0, 1, 0) |
| aaa | Non-running status | Feature 0 | authflag 0 | (0, 0, 0, 0) |
| bbb | Foreground state | Feature 1 | authflag 1 | (1, 1, 0, 0) |
| bbb | Background state | Feature 1 | authflag 1 | (1, 0, 0, 1) |
| ccc | Foreground state | Feature 2 | authflag 2 | (1, 1, 1, 0) |
| ccc | Foreground state | Feature 3 | authflag 3 | (0, 0, 1, 0) |
| ccc | Background state | Feature 2 | authflag 2 | (0, 1, 1, 0) |
| ccc | Background state | Feature 3 | authflag 3 | (0, 1, 1, 0) |

For example, with reference to Table 1, the management rule may be in a data table structure.
It can be learned from Table 1 that when the application aaa runs in the foreground (in the foreground state), the status of the permission bit corresponding to the kernel function Feature 0 of the application aaa is (1, 1, 1, 1). When the application aaa runs in the background (in the background state), the status of the permission bit corresponding to the kernel function Feature 0 of the application aaa is (1, 0, 1, 0). When the application aaa is not running (in the non-running status), the status of the permission bit corresponding to the kernel function Feature 0 of the application aaa is (0, 0, 0, 0). Because (1, 1, 1, 1), (1, 0, 1, 0), and (0, 0, 0, 0) all represent the permission bit authflag 0, the permission bits in a same position correspond to a same permission. For example, in the authflag 0, the first bits may correspond to the "read" permission, the second bits may correspond to the "write" permission, the third bits may correspond to the "fully control" permission, and the fourth bits may correspond to the "execute" permission. However, when the application aaa is in different running statuses, the statuses of the permission bit corresponding to the kernel function Feature 0 of the application aaa may be different. For example, when the application aaa is in the foreground state, the application has the "write" permission on the kernel function Feature 0. When the application aaa is in the background state, the application does not have the "write" permission on the kernel function Feature 0. When the application aaa is in the non-running status, the application also does not have the "write" permission on the kernel function Feature 0.

After detecting that the application is switched from the first state to the second state, the electronic device may obtain, based on the second state of the application and the management rule described in Table 1, the permission bit corresponding to each kernel function of the application and the status of the permission bit.

In some embodiments, the kernel function may further include at least one subcommand. The subcommand may be used by the application that accesses the subcommand, to implement a function corresponding to the subcommand. The permission bit of the kernel function and the status of the permission bit may include a permission bit of each subcommand in the kernel function and a status of the permission bit. For the permission bit and the status of the permission bit of each subcommand, refer to the descriptions of the permission bit and the status of the permission bit of each kernel function in the foregoing embodiment. Details are not described again.

S203: Obtain a first permission bit and a second permission bit.

The first permission bit is a permission bit that is in the enabled state when the application is in the first state and that is in the disabled state when the application is in the second state. The second permission bit is a permission bit that is in the disabled state when the application is in the first state and that is in the enabled state when the application is in the second state.

In some embodiments, the electronic device may further obtain, based on the first state of the application and the management rule described in Table 1, the permission bit corresponding to each kernel function of the application and the status of the permission bit. Then, the electronic device may determine a target permission bit in the permission bits based on the permission bit corresponding to each kernel function of the application and the status of the permission bit when the application is in the first state, and the permission bit corresponding to each kernel function of the application and the status of the permission bit when the application is in the second state. The status of the target permission bit varies when the application is in the first state and the second state.

An example in which the first state is the foreground state, and the second state is the background state is used. Still refer to Table 1. When the application ccc runs in the foreground (in the foreground state), the status of the permission bit corresponding to the kernel function Feature 2 of the application ccc is (1, 1, 1, 0), and the status of the permission bit corresponding to the kernel function Feature 3 of the application ccc is (0, 0, 1, 0). When the application ccc runs in the background (in the background state), the status of the permission bit corresponding to the kernel function Feature 2 of the application ccc is (0, 1, 1, 0), and the status of the permission bit corresponding to the kernel function Feature 3 of the application ccc is (0, 1, 1, 0).

Because (1, 1, 1, 0) and (0, 1, 1, 0) both represent the permission bit authflag 2, the permission bits in the same position in (1, 1, 1, 0) and (0, 1, 1, 0) correspond to the same permission. For example, in the authflag 2, the first bits may correspond to the "read" permission, the second bits may correspond to the "write" permission, the third bits may correspond to the "fully control" permission, and the fourth bits may correspond to the "execute" permission.

Because (0, 0, 1, 0) and (0, 1, 1, 0) both represent the permission bit authflag 3, the permission bits in the same position in (0, 0, 1, 0) and (0, 1, 1, 0) correspond to the same permission. For example, in the authflag 3, the first bits may correspond to a "delete" permission, the second bits may correspond to a "modify" permission, the third bits may correspond to the "write" permission, and the fourth bits may correspond to the "read" permission.

The electronic device may determine the permission bit corresponding to the "read" permission as the target permission bit, based on the status of each permission bit in the permission bit authflag 2 when the application ccc is in the foreground state, and based on the status of each permission bit in the permission bit authflag 2 when the application ccc is in the background state. The permission bit corresponding to the "read" permission is in the enabled state when the application is in the first state, and is in the disabled state when the application is in the second state.

The electronic device may determine the permission bit corresponding to the "modify" permission as the target permission bit, based on the status of each permission bit in the permission bit authflag 3 when the application ccc is in the foreground state, and based on the status of each permission bit in the permission bit authflag 3 when the application ccc is in the background state. The permission bit corresponding to the "modify" permission is in the disabled state when the application is in the first state, and is in the enabled state when the application is in the second state.

In some embodiments, after determining the target permission bit, the electronic device may determine the first permission bit and the second permission bit in each target permission bit.

The permission bit authflag 3 corresponding to the application ccc described in Table 1 is still used as an example. The target permission bits corresponding to the application ccc are the permission bit corresponding to the "read" permission and the permission bit corresponding to the "modify" permission. The permission bit corresponding to the "read" permission is in the enabled state when the application is in the first state, and is in the disabled state when the application is in the second state. Therefore, the permission bit corresponding to the "read" permission may be determined as the first permission bit. The permission bit corresponding to the "modify" permission is in the disabled state when the application is in the first state, and is in the enabled state when the application is in the second state. Therefore, the permission bit corresponding to the "modify" permission may be determined as the first permission bit.

S204: Delete, based on a kernel function corresponding to the first permission bit, behavior data generated by the application when the first permission bit is in the enabled state.

For example, the kernel function corresponding to the first permission bit may implement a function of displaying, by the application, a corresponding application interface on the electronic device. After the application switches from the first state to the second state, if the electronic device determines the first permission bit in the permission bits, that is, the electronic device determines to change the status of the first permission bit from the enabled state to the disabled state, before the electronic device changes the status of the first permission bit, the behavior data generated by the application when the first permission bit is in the enabled state needs to be deleted. For example, the electronic device needs to close the application interface displayed when the application is in the first state. Alternatively, the electronic device needs to cancel a high priority set when the application is in the first state, or the like.

S205: Change statuses of the first permission bit and the second permission bit.

In some embodiments, the electronic device may change the first permission bit from the enabled state to the disabled state, and change the second permission bit from the disabled state to the enabled state, to complete management of the permission bit of the kernel function corresponding to the application when the running status of the application changes. This can save running memory of the electronic device, and reduce power consumption of the electronic device.

The method provided in embodiments of this application may be applied to an electronic device including the operating system shown in FIG. 1. The operating system may include a kernel layer (may also be referred to as a kernel module in embodiments of this application) and a system library (may also be referred to as a system service module in embodiments of this application). The following describes the method in detail with reference to the operating system and a specific example.

As shown in FIG. 5, an application 1 whose application ID is 12345, an application 2 whose application ID is 10086, and an application 3 whose application ID is 1000 are installed in the electronic device. The application ID is an identifier representing each application. The application 1 and the application 2 are third-party applications, and the application 3 is a system application (an application used to maintain running of an operating system).

The system developer may preset at least one kernel function in the kernel module. The kernel function may be a function frequently used by each application. The application may access the kernel function through a control node corresponding to the kernel function.

For example, a kernel function feature 0, a kernel function feature 1, and a kernel function feature 2 are set in the kernel module. The application 1, the application 2, and the application 3 may all access the kernel function feature 0 through a control node a. The application 1, the application 2, and the application 3 may also access the kernel function feature 1 through a control node b. The application 3 may access the kernel function feature 2 and the like through a control node c.

The kernel function may further include at least one subcommand. For example, the kernel function feature 0 includes a subcommand cmd 0, a subcommand cmd 1, a subcommand cmd 2, and the like that correspond to the feature 0. The kernel function feature 1 also includes the subcommand cmd 0, the subcommand cmd 1, the subcommand cmd 2, and the like that correspond to the feature 1.

The kernel module stores a management rule. The management rule includes a mapping relationship between the running status of the application, and the permission bit corresponding to each kernel function and the status of the permission bit.

For example, the management rule includes a mapping relationship between the foreground state of the application 1, and the permission bit corresponding to each kernel function and the status of the permission bit, and includes a mapping relationship between the background state of the application 1, and the permission bit corresponding to each kernel function and the status of the permission bit. When detecting the switching instruction input by the user for the application 1, the system service module switches the application 1 from the foreground state to the background state.

Then, the system service module may obtain, based on the background state of the application 1 and the management rule, the permission bit of each kernel function for the application and the status of the permission bit. For example, the system service module may obtain, based on the background state of the application 1 and the management rule, and when the application 1 is in the foreground state and the background state, respectively, the permission bits of the subcommand cmd 0 in the kernel function feature 0 for the application and the statuses of the permission bits.

For example, when the application 1 is in the foreground state, the permission bit of the subcommand cmd 0 for the application and the status of the permission bit may be represented as (1, 0, 1, 0). When the application 1 is in the background state, the permission bit of the subcommand cmd 0 for the application and the status of the permission bit may be represented as (0, 0, 1, 1). Because (1, 0, 1, 0) and (0, 0, 1, 1) both represent the permission bit of the subcommand cmd 0, the permission bits in the same position correspond to the same permission. For example, in (1, 0, 1, 0) and (0, 0, 1, 1), the first bits may both correspond to the "read" permission, the second bits may both correspond to the "write" permission, the third bits may both correspond to the "fully control" permission, and the fourth bits may both correspond to the "execute" permission.

The kernel module may obtain the first permission bit of the subcommand cmd 0, based on the permission bit of the subcommand cmd 0 for the application and the status of the permission bit that exist when the application 1 is in the foreground state and the background state, respectively. The first permission bit is a permission bit that is in the enabled state when the application 1 is in the foreground state and that is in the disabled state when the application 1 is in the background state. That is, the kernel module may determine that the permission bit corresponding to the "read" permission is the first permission bit.

Correspondingly, the kernel module may also obtain the second permission bit of the subcommand cmd 0, based on the permission bit of the subcommand cmd 0 for the application and the status of the permission bit that exist when the application 1 is in the foreground state and the background state, respectively. The second permission bit is a permission bit that is in the disabled state when the application 1 is in the foreground state and that is in the enabled state when the application 1 is in the background state. That is, the kernel module may determine that the permission bit corresponding to the "execute" permission is the second permission bit.

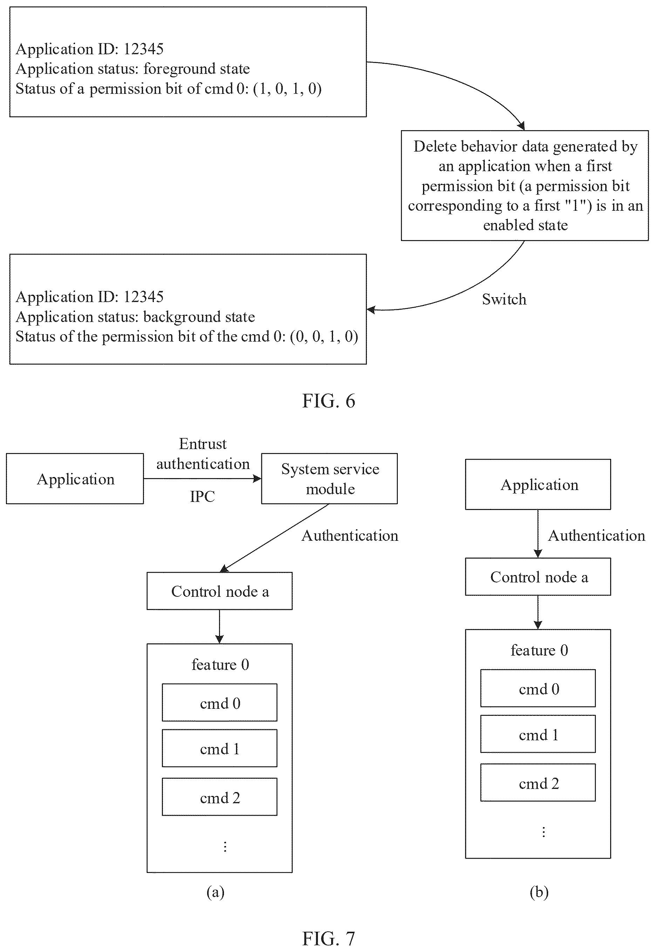

Refer to FIG. 6. After determining the first permission bit and the second permission bit, the kernel module may delete, based on the subcommand cmd 0 corresponding to the first permission bit, the behavior data generated by the application when the first permission bit is in the enabled state. Then, the system service module may change the statuses of the first permission bit and the second permission bit. That is, the system service module may change the permission bit corresponding to the "read" permission from the enabled state to the disabled state. In addition, the system service module may change the permission bit corresponding to the "execute" permission from the disabled state to the enabled state.

In some embodiments, the kernel module may register, with the system service module and based on the kernel function, a callback function that is used to delete the behavior data generated by the application when the first permission bit is in the enabled state. The kernel module may delete, based on the registered callback function, behavior data generated by a corresponding application.

After detecting an access request that is of the application 1 in the background state and that is for the subcommand cmd 0 in the kernel function feature 0, the kernel module may determine, based on the permission bit of the subcommand cmd 0 for the application in the background state and the status of the permission bit, whether to enable, for the application 1, a related permission corresponding to the subcommand cmd 0.

In this example, in one aspect, a system developer may set a to-be-managed kernel function in the kernel module. For example, with reference to FIG. 5, the system developer may set the kernel function feature 0, the kernel function feature 1, the kernel function feature 2, the kernel function feature 3, and the like in the kernel module. Functions corresponding to the kernel functions that are set in the kernel module may be functions that a user is interested in, or may be functions that are frequently used by applications. In this kernel function setting manner, the system service module can manage all kernel functions in each kernel function (may also be referred to as global management). Alternatively, the system service module can manage some kernel functions in each kernel function (may also be referred to as granularity-based management). In other words, the application permission management method provided in this application considers both global management and granularity-based management.

In another aspect, after the running status of the application changes, the system service module may change the permission of the application, to dynamically manage the permission that the application has.

In still another aspect, when the system service module manages the permission that the application has, an authentication mechanism may be performed by the kernel module. Compared with a conventional method, as shown in (a) in FIG. 7, in which the application first performs IPC with the system service module and entrusts the system service module to authenticate the application, in this method, as shown in (b) in FIG. 7, the kernel module may directly authenticate whether the application has a corresponding permission. The IPC is reduced at least once, and power consumption of the electronic device is reduced.

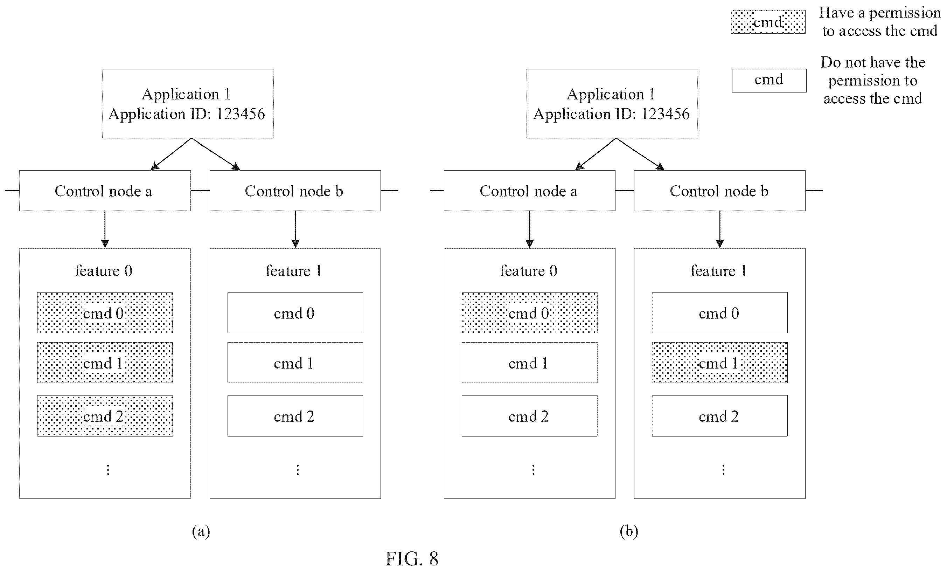

In yet another aspect, as shown in (a) in FIG. 8, when a conventional electronic device manages the kernel function and the status of the permission bit of the subcommand in the kernel function, and the application has a permission to access a kernel function, the application may access all subcommands in the kernel function. Alternatively, if the application does not have the permission to access a kernel function, the application does not have the permission to access all subcommands in the kernel. However, in this application, as shown in (b) in FIG. 8, the system service module may manage the kernel function and the status of the permission bit of the subcommand in the kernel function. Even if the application can access a kernel function, it does not indicate that the application can access all subcommands in the kernel function. Therefore, the management granularity is more refined.

It may be understood that, to implement the foregoing functions, the electronic device includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in this embodiment is an example and is merely logical function division. In actual implementation, there may be another division manner.

Embodiments of this application further provide a computer-readable storage medium. The computer-readable storage medium stores a computer program. When the computer program is run on an electronic device, the electronic device is enabled to perform the foregoing related method steps, to implement the application permission management method in the foregoing embodiments.

Embodiments of this application further provide a computer program product. When the computer program product runs on an electronic device, the electronic device is enabled to perform the foregoing related steps, to implement the application permission management method performed by the electronic device in the foregoing embodiments.

In addition, embodiments of this application further provide an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the application permission management method in the foregoing method embodiments.

The electronic device, the computer-readable storage medium, the computer program product, or the chip provided in embodiments of this application is configured to perform the corresponding method provided above. Therefore, for beneficial effects that can be achieved, refer to the beneficial effects of the corresponding method provided above. Details are not described herein.

Based on the descriptions about the foregoing implementations, a person skilled in the art may understand that, for a purpose of convenient and brief description, division into the foregoing functional modules is used merely as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the current technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An application permission management method, applied to an electronic device, comprising:
switching, in response to a switching instruction input by a user for an application, the application from a first state to a second state, wherein the first state is different from the second state;
determining, based on the second state and a management rule, a target permission bit of each kernel function for the application, wherein a status of the target permission bit varies when the application is in the first state and the second state; and
changing the status of the target permission bit.

2. The method according to claim 1, wherein the management rule comprises a mapping relationship between a running status of the application, and a permission bit of the kernel function and a status of the permission bit.

3. The method according to claim 1 or 2, wherein the management rule is generated based on an expected behavior of the application in each running status, the kernel function that needs to be accessed when the application implements the expected behavior, and the status of the permission bit of each kernel function for the application.

4. The method according to any one of claims 1 to 3, wherein the kernel function comprises at least one subcommand, and the permission bit of the kernel function and the status of the permission bit comprise a permission bit of the subcommand in the kernel function and a status of the permission bit of the subcommand.

5. The method according to any one of claims 1 to 4, wherein the target permission bit comprises a first permission bit, and the first permission bit is the permission bit that is in an enabled state when the application is in the first state and that is in a disabled state when the application is in the second state.

6. The method according to claim 5, wherein the changing the status of the target permission bit comprises:
changing a status of the first permission bit from the enabled state to the disabled state.

7. The method according to claim 6, wherein before the changing a status of the first permission bit, the method further comprises:
deleting, based on the kernel function corresponding to the first permission bit, behavior data generated by the application when the first permission bit is in the enabled state.

8. The method according to any one of claims 1 to 7, wherein the target permission bit further comprises a second permission bit, and the second permission bit is the permission bit that is in the disabled state when the application is in the first state and that is in the enabled state when the application is in the second state.

9. The method according to claim 8, wherein the changing the status of the target permission bit comprises:
changing a status of the second permission bit from the disabled state to the enabled state.

10. An electronic device, comprising a memory and one or more processors, wherein the memory is coupled to the processor, the memory stores computer program code, the computer program code comprises computer instructions, and when the computer instructions are executed by the processor, the electronic device is enabled to perform the application permission management method according to any one of claims 1 to 9.

11. A computer storage medium, comprising computer instructions, wherein when the computer instructions are run on an electronic device, the electronic device is enabled to perform the application permission management method according to any one of claims 1 to 9.

12. A computer program product, wherein when the computer program product runs on a computer, the computer is enabled to perform the application permission management method according to any one of claims 1 to 9.
